# EUROPEAN PATENT APPLICATION

(11) **EP 1 167 859 A2**
(43) Date of publication of application: **02.01.2002**
(21) Application number: 01305481.2
(22) Date of filing: 25.06.2001
(51) Int. Cl.: F16N 7/38, F16N 17/00

(54) **Oil system**

(30) Priority: 30.06.2000 GB 0016196
(71) Applicant: Lucas Industries Limited, West Midlands B90 4LA (GB)
(72) Inventor: Howard, Rodney Stuart, Hemel Hempstead, Hertfordshire HP1 1SP (GB)
(74) Representative: Beck, Simon Antony

(57) **Abstract**

An oil system is provided for use with a rotating machine, for example an aircraft generator and associated transmission. The oil system allows the generator to be run without lubrication for a short period of time. Such a situation is likely to occur when the aircraft is inverted or experiences zero G conditions.

The oil system includes an oil reservoir 100 that supplies oil to a first pump 4 for supplying oil for lubricating and/or cooling the generator and for lubricating a variable transmission associated with the generator. The oil reservoir also supplies oil to a second pump 6 that provides oil for operating hydraulic actuators 110, 112 for controlling the operation of the variable transmission. A return path is provided for the oil to the reservoir. The oil system further includes an oil fill inlet such that a single filling operation through the oil fill inlet causes oil to flow through the return path towards the reservoir causing air to be purged through the return path.

## Description

The present invention relates to an oil system for use with a rotating machine, for example an aircraft generator and associated transmission.

Oil may be used within a single machine for many purposes. In the context of an electrical generator within an avionics environment, the oil may be used to lubricate bearings and other rotating parts, to act as a coolant within the generator, and also to act as a control fluid within a speed conversion system (variable transmission) used to ensure that a variable input speed is converted to a near constant generator speed.

The space available for aeronautical devices is typically very limited, and the same applies to generators and their drive arrangement. Thus, for example, a generator designed to accept a variable input speed from a gas turbine engine and arranged to provide an output in the region of 90kVA may be constrained, with its variable speed transmission, to fit within a space of 270mm x 466mm x 375mm. For civilian aircraft, such a generator can generally be assumed to work within a fairly well determined range of orientations since civilian aircraft often fly level, do not undertake steep ascents or descents or tight turns. Nevertheless, manufacturers and regulatory authorities require that the generator sustain operation for at least 20 seconds in a negative G environment, which might be encountered if the aircraft were to undergo a steep dive or possibly if it encountered clear air turbulence. It is known, in the prior art, for a generator to have an actively scavenged sump with one pump provided to return oil to the oil system when the generator is in its normal (upright) orientation, and a second pump located so as to return oil to the oil system when the generator is in the inverted orientation. The applicant has realised that the provision of the second pump is wasteful, adds complexity to the generator, and reduces the space available within the housing for critical components or oil.

According to a first aspect of the present invention, there is provided an oil management system for a rotating machine capable of being operated in an inverted orientation for no more than a predetermined period of time, in which the oil system comprises an oil reservoir, a first pump for pumping oil from the oil reservoir for cooling and/or lubrication of the rotating machine, a gravity drain into a sump and a scavenge pump for returning oil from the sump to the reservoir, wherein the supply of oil to the rotating machine is interrupted when the machine is in its inverted orientation.

The applicant has realised that a machine which has been subject to lubrication can in general, run without damage for a short period of time without further lubrication. Based on this observation, the applicant has realised that it is possible to run the generator without lubrication during the relatively short period for which it must be capable of withstanding zero G conditions. By inhibiting the supply of lubrication to the generator, the applicant has realised that it then becomes possible to rely on only one scavenge pump. This allows a rarely used component to be omitted from the machine thereby saving weight and space, which may be used for other components or for allowing more oil to be maintained in the lubrication system.

Preferably the interruption of the supply of lubricating oil is achieved by placing the pump supply duct in the reservoir at a position where it becomes uncovered (not in fluid flow communication with the oil) when the machine is inverted or in zero G conditions. Thus the supply duct is typically located along a lowermost wall of the reservoir, assuming that the reservoir is in its normal "upright" configuration. However, mechanical means such as gravity or electrically operated bypass valves might also be used for redirecting the outlet of the pump or opening up a "short circuit" flow path back to the reservoir under inverted or zero G conditions.

By inhibiting the flow of oil to the rotating machine when it is inverted, the possibility of a build up of oil flooding the machine in its inverted configuration is prevented. Consequently, there becomes no need to arrange for oil to drain away from the rotating machine when it is inverted, thereby allowing use of only a single scavenge pump.

Preferably a further pump is in fluid flow connection with the oil reservoir in order to deliver oil therefrom to actuators forming part of a variable transmission which is part of a drive chain to the rotating machine. Advantageously an oil flow duct to the further pump extends within the body of the reservoir to a central region thereof such that the duct remains covered by oil irrespective of the orientation of the reservoir.

Preferably oil is filtered before being returned to the reservoir. Thus a single filter effectively cleans the oil which is used by both the pump for supplying lubricating oil and the pump for supplying oil to the actuators of a control system. This results in a further space saving and simplification of the oil system compared to prior art systems.

According to a second aspect of the present invention, there is provided an oil system for an electrical generator, comprising: an oil reservoir supplying oil to a first pump for supplying oil for lubricating and/or cooling the generator and for lubricating a variable transmission associated with the generator, said oil reservoir also supplying oil to a second pump for providing oil for operating hydraulic actuators for controlling the operation of the variable transmission; and a return path for the oil to the reservoir; the system further including an oil fill inlet pump such that a single filling operation through the oil fill inlet causes oil to flow through the return path towards the reservoir thereby purging air through an oil cooler and the return path.

Preferably the oil reservoir has an overflow, and the height of the overflow is selected such that, during a filling operation, oil is introduced into the oil fill inlet until such time as oil exits from the reservoir overflow. Once this has been achieved, the user can then be satisfied that a sufficient amount of oil has been introduced into the system during the filling operation.

The outlet of the first pump may not be directly connected to the return line, since lubricating oil may be pumped out of the gravity drain sump via a scavenge pump. Thus there can be an effectively unfilled portion of the system formed by the oil ducts downstream of the first pump but upstream of the scavenge pump. However, the volume of this ducting can be determined from the design of the lubricating system, and the height of the overflow is adjusted such that sufficient oil is introduced into the reservoir in order to fill these ducts which were not filled during the oil filling process without causing the oil level in the reservoir to drop below an acceptable value.

Advantageously fluid flow paths to external devices, such as oil coolers, are designed such that no air is trapped in these external paths during the filling process. Thus, for example, any bypass route around an oil cooler must either be open, or forced to be open during the filling process in order that air can be purged from these passages.

The present invention will further be described, by way of example, with reference to the accompanying drawings, in which:
Figure 1 is a schematic cross-section through a constant speed generator for use in an avionics environment;
Figure 2 is schematic diagram of the oil system of the generator shown in Figure 1;
Figure 3 is a representation of a twin chamber de-aerator, which is located within the oil reservoir; and
Figure 4 schematically illustrates the oil reservoir in greater detail.

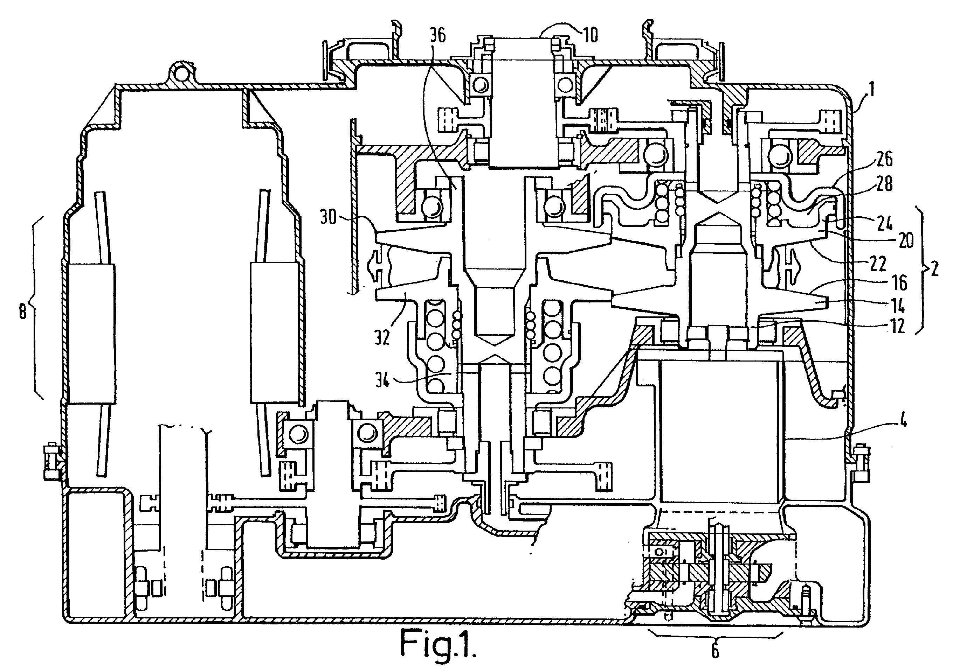

The generator shown in Figure 1 comprises a housing 1 which encloses a continuously variable transmission generally designated 2, utilising a belt drive, a low pressure pump 4, a high pressure pump 6, a generator, generally designated 8, and an oil system disposed throughout the housing 1.

The transmission 2 enables the variable speed of an input shaft 10 which receives a drive from a spool of a gas turbine engine to be converted to a near constant speed such that the generator 8 can be run at a near constant speed. In order to do this, a first shaft 12 of the belt drive mechanism carries a flange 14 which defines an inclined surface 16 against which a drive belt bears. The shaft 12 also carries a coaxially disposed movable flange 20 drivingly connected to the shaft 12 via a splined portion (not shown). The movable flange 20 defines a further inclined surface 22 facing towards the surface 16, which surfaces serve to define a V-shaped channel whose width can be varied by changing the axial position of the flange 20 with respect to the fixed flange 14. The flange 20 has a circularly symmetric wall 24 extending towards and co-operating with a generally cup shaped element 26 carried on the shaft 12 to define a first hydraulic chamber 28 therebetween which is in fluid flow communication via a control duct (not shown) with an associated control valve. Similarly, a fixed flange 30 and a movable flange 32 are associated with a second shaft 36 and are associated with a second hydraulic control chamber 34. A steel segmented belt having a cross-section in the form of a trapezium, with the outer most surface being wider than the inner most surface is used to interconnect the first and second variable ratio pulleys formed between the pairs of fixed and movable flanges, respectively, in order to drivingly connect the flanges. The shaft 12 is in geared driving connection with the input shaft 10 via a step down gear, and the shaft 36 is connected to the generator 8 via a compound step up gear.

The position of each movable flange with respect to the associated fixed flange is controlled by the hydraulic actuators formed by each moveable flange and its associated hydraulic chambers. Since the interconnecting belt is of a fixed width, moving the flanges closer together forces the belt to take a path of increased radial distance. The interconnecting belt has a fixed length, and consequently as one movable flange is moved towards its associated fixed flange, the other movable flange must move away from its associated fixed flange in order to ensure that the path from an arbitrary starting point, around one of the pulleys, to the second pulley, around the second pulley and back to the fixed arbitrary starting point remains a constant distance.

It is important in such a pulley system that the position of the flanges can be well controlled. It is also important that the compressive force exerted upon the belt can be well controlled since belt wear increases rapidly with compressive force but belt slippage is damaging to both the belt and the pulleys. Thus a controller or control system (not shown) is provided which controls both the drive ratio and the compressive load exerted on the belt. It is important that the controller can rapidly change the hydraulic pressures and fluid volumes within the hydraulic chambers 28 and 34, and this requires that the hydraulic fluid must have very little or no air entrained therein. This is because air bubbles are by their very nature compressible and the air bubbles will compress when an increase in hydraulic pressure is made in preference to movement of the actuating surfaces. The hydraulic system may require hydraulic pressures in the region of 100 bar. This requires the use of a high pressure pump in order to achieve this hydraulic pressure. The action of pumping fluid to this pressure warms the fluid, and as a result it is not possible, within the limited space available within an aircraft for these components, to utilise a dedicated supply of control fluid since only a small volume of fluid could be provided and this would suffer unacceptable heat rejection problems. Therefore, in order that the heating of the control fluid does not become a problem, the lubricating oil within the generator is also used as the control fluid for the continuously variable transmission. This solves the heat rejection problem, but does require the oil to be highly de-aerated prior to its use within the belt control system. However, the oil is also sprayed onto bearings and gears in order to lubricate them and is also used within the rapidly rotating generator 8 as a cooling fluid. These uses allow air to be easily entrained within the oil.

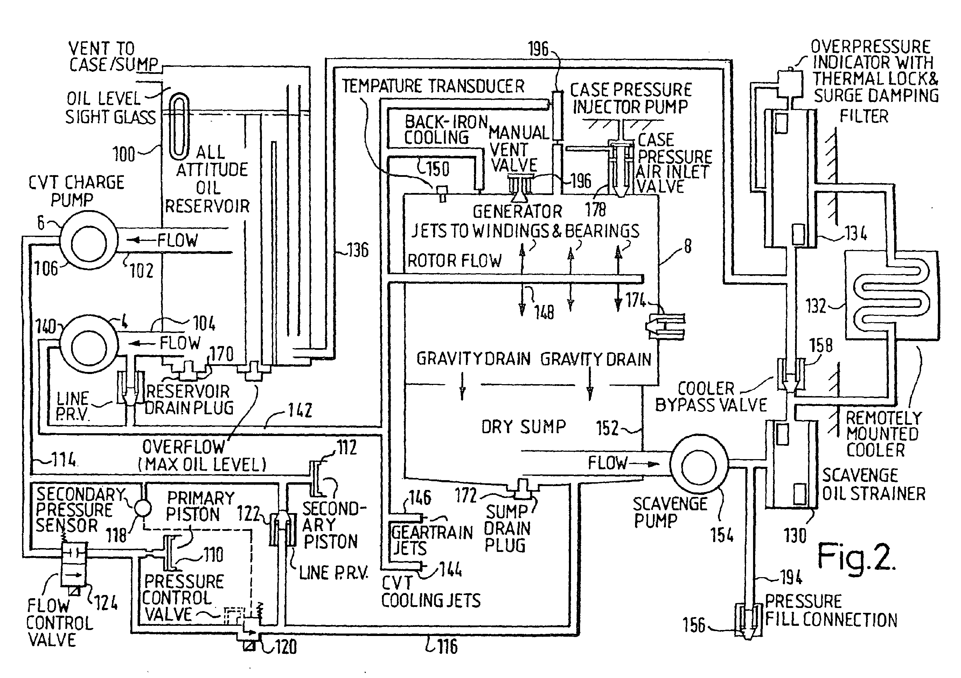

Figure 2 schematically illustrates the oil system within the power generation system. An oil reservoir 100 acts to contain de-aerated oil. The reservoir has a first outlet 102 connected to an inlet of the high pressure pump 6 and a second outlet 104 connected to an inlet of the low pressure pump 4. An outlet 106 of the high pressure pump 6 provides oil which is ducted towards a primary piston 110 formed by movable flange 20 and the cup shaped element 26 (Figure 1) thereby defining the first hydraulic control chamber 28, and a secondary piston 112 (similar to the primary piston) which contains the second hydraulic control chamber 34. As shown in Figure 2, both the primary piston 110 and the secondary piston 112 can be regarded as being connected between a high pressure supply line 114 and a low pressure return line 116. The pressure in the high pressure line 114 is measured by a pressure sensor 118 and supplied to a controller (not shown). The controller uses a measurement of oil pressure, aero-engine drive speed and/or generator speed and electrical demand to schedule and/or control the hydraulic pressure acting in the primary and secondary pistons. The secondary piston 112 is connected directly to the high pressure line 114. However, the pressure within the high pressure line 114 can be controlled by spilling pressurised lubricant from the high pressure line 114 to the low pressure return line 116 via an electrically controlled pressure control valve 120 connected between the high pressure and low pressure lines, respectively. Thus in order to increase the hydraulic pressure within the secondary piston 112, the pressure control valve 120 is moved to restrict flow therethrough, and in order to release pressure within the secondary piston, the pressure control valve 120 is opened. A normally closed pressure return valve 122 is connected between the fluid port to the secondary piston 112 and the low pressure return line 116. The valve 122 is normally closed, but is set to open at a predetermined pressure in order to protect the hydraulic system in the event of system over pressure.

The primary piston 110 receives high pressure fluid from the high pressure line 114 via an electrically operated flow control valve 124. The valve 124 is in series with the pressure control valve 120 between the high pressure line 114 and the low pressure line 116, and the primary piston 110 is connected to the node between these valves. This configuration of valves means that the pressure control valve 120 can be used to simultaneously increase the pressure in both the primary and secondary pistons in order to prevent belt slippage, whereas the balance of flow rates through the control valve 124 and the pressure control valve 120 sets the relative positions of the primary and secondary pistons. Oil from the low pressure line 116 is returned to the sump 152.

An outlet 140 of the low pressure pump 4 supplies oil via supply line 142 to oil cooling jets 144 for spraying oil onto the moving parts of the continuously variable transmission, to jets 146 for spraying oil onto the gear train interconnecting the transmission to the generator, to jets 148 for lubricating the windings and bearings within the generator and also along a cooling path 150 for cooling the stator within the generator.

The generator 8 has a gravity drain to a dry sump 152. Oil collecting in the sump 152 is pumped out of the sump by a single scavenge pump 154. The output line from the scavenge pump connects with the low pressure return line 136 via an oil strainer 130, a remotely mounted oil cooler 132 and an oil filter 134. A pressure fill connector 156 is in fluid flow communication with the low pressure return line 194 in order to allow the oil system to be filled. An oil cooler by-pass valve 158 is connected between the output from the strainer 130 and the line 136 in order to by-pass the oil cooler and oil filter during cold start or in the event of cooler, filter or external line blockage. The oil by-pass valve is normally closed and set to open at a predetermined over pressure.

In order to drain the system, a drain plug 170 is provided in the reservoir, similarly a drain plug 172 is provided for the sump and a pressure operated vent valve 174 is provided in the generator in order to relieve the excess pressure occurring within the generator. A manually operated vent valve 176 is provided to vent pressure from the generator. An automatic air inlet valve 178 is provided to allow air to enter the generator via an injector pump 196 to provide positive internal pressure.

In use, the oil in the return line 136 may have a velocity of up to 6ms⁻¹. This flow is sufficient to enable the oil to be de-aerated within a vortex aerator which is located within the reservoir 100.
Vortex de-aerators work by exploiting the difference in density between the oil and an air bubble entrained therein. The oil, under pressure, is forced through a restricted aperture in order to increase its velocity. The aperture is arranged to be tangential with the cylindrical wall of the aerator in order that the oil is spun into a helical path within the aerator.

The provision of a plurality of smaller diameter de-aerators each handling a proportion of the total de-aeration task provides for better de-aeration of the oil than in the prior art single chamber systems. The level of de-aeration is important within the context of speed control systems using continuously variable transmission having belt drive of the type described herein before.

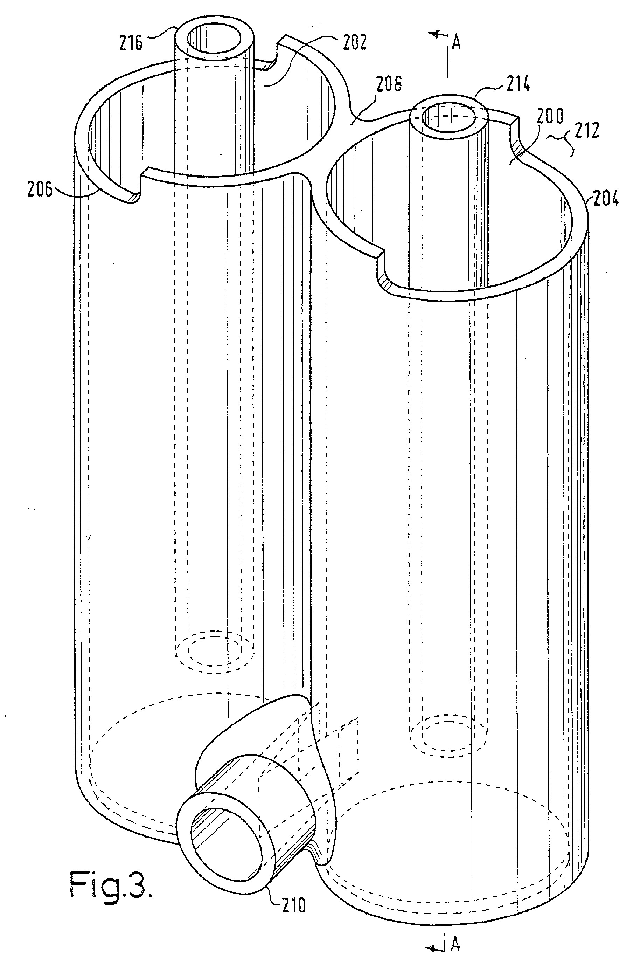

Figure 3 schematically illustrates a suitable de-aerator which can be placed within the oil reservoir 100. The de-aerator comprises two cylinders 200 and 202 defined by cylindrical walls 204 and 206, respectively. The walls 204 and 206 abut and merge together in a central region 208. An inlet duct 210 extends horizontally from the base of the cylinders. The inlet duct is bifurcated by a knife edge such that it divides into two fluid flow paths. Each path tapers from a cylindrical to a rectangular cross-section, with the long axis of the rectangle extending vertically. The rectangular channel shape intersects with the circular cross-section of the inner of the chambers in order to define an injection region which is tangential with the walls of the chambers. Thus fluid introduced at pressure through the duct 210 is split equally into two fluid flow paths and injected into the chambers 200 and 202 at increased velocity and tangentially in order to form a vortex in each chamber.

The uppermost portions of each wall 204 and 206 have semicircular portions cut out from the wall to define semicircular lips of reduced height. One of the lips is indicated generally as 212. As shown in Figure 3, the lips face away from each other. These lips provide a controlled discharge route for oil at the uppermost region of the de-aerators. Each de-aerator also has a axially positioned dip tube 214 and 216 which extends downward into the aerator and finishes at a plane just above the uppermost portion of the tangential channel. The dip tubes 214 and 216 extend above the upper surface of the aerator, and in use pass through and extend above a baffle plate.

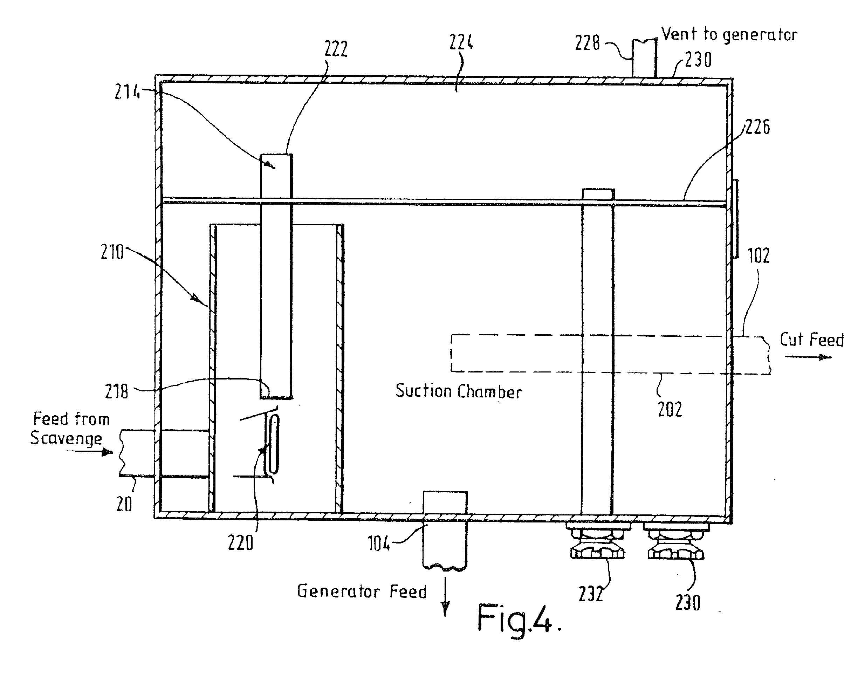

The oil reservoir 100 is shown in greater detail in Figure 4. The de-aerator 200 is shown sectioned through the line A-A' of Figure 3, and consequently the rectangular nature of the nozzle 220 is clearly shown as is the relative position of the dip tube 214, and the fact that its lower end 218 lies just above the uppermost portion of the channel 220 through which oil is introduced into the chamber. An upper end 222 of the dip tube vents into a plenum chamber 224 defined above a baffle plate 226. The plenum chamber vents to the generator via a duct 228. Once oil has escaped over the upper edge of the de-aerator, it collects in the reservoir from where it can flow through the outlet 104 to the low pressure pump and via the pipe 102 to the high pressure pump. The outlet 104 is formed in the lower wall of the reservoir 100, whereas the feed for the high pressure pump is taken from the centre of the reservoir. Thus, should the reservoir become inverted during flight, the feed for the high pressure pump remains within the oil, whereas the feed for the low pressure pump rises above the oil. This is important since oil supply to the control actuators for the continuously variable drive must be maintained at all times. However, oil flow to the generator must be inhibited since otherwise the generator would start to fill with oil since the gravity drain to the sump cannot work when the generator is inverted and windage losses would increase dramatically, possibly causing failure of the generator. The position of the feed 104 in the lower wall of the oil reservoir ensures that oil flow to the generator is automatically cut should negative G or inversion occur.

The reservoir includes a drain 230 and an overflow 232.

The overflow is significant since it enables the oil system to be filled in a single operation.

In order to fill a previously drained or unfilled lubrication system, overflow 232 is opened and then oil is injected via connector 156 of Figure 2. This causes oil to flow from the connector up one arm of the low pressure return line through the strainer 130, the oil cooler 132 the filter 134 and into the reservoir via the line 136 and the vortex de aerator.

Some of the lubrication system does not participate in the flow of oil from the connector to the reservoir. In particular, the line 142 at the output of the low pressure pump and paths to the gear train jets 146 and cooling jets 144 are not flooded with oil during the filling process. Neither does oil flow along path 116. The volume of oil entrained in these paths is generally not significant, but nevertheless the height of the overflow should be selected in order to account for the oil that will be "lost" from the reservoir into this previously unfilled volume once the pumps start turning. Similarly, care should be taken to ensure that no air remains entrained in the route to the remotely mounted oil cooler. It is thus possible to ensure that a single filling operation will be sufficient to correctly fill the oil system associated with the generator and transmission.

A particular advantage of the oil system described hereinabove is that it only requires one oil filter. This compares with prior art systems which have required an oil filter associated with each pump. The use of a single oil filter not only saves space but saves a considerable amount of cost to the operator. Oil filters for use with avionics systems can cost several thousand dollars each. Thus the move towards having only a single oil filter rather than two is particularly beneficial. Furthermore, the use of only a single component in place of two previous components can also give rise to increased reliability since the opportunity for leaks is reduced.

It should further be remembered that, in a two oil filter system, failure of either oil filter renders the system unusable.

The removal of duplicated or unnecessary components from the oil system, in this case a second scavage pump and a second oil filter frees up space within the limited space available allowing important components to be manufactured bigger and stronger, and also for more oil to be provided within the lubrication system itself. This is important since each time the oil is worked by taking one complete cycle around the lubrication system it becomes slightly degraded. Put simply, by having more oil, any given volume of the oil is worked less frequently and consequently the service intervals between oil changes can be extended. Thus the oil system described hereinabove provides for a simplification of the system to cope with limited periods of inversion, and also enables a single filling operation to be sufficient to fill the system, rather than multiple filling operations as is known with the prior art in order to ensure that trapped pockets of air have been purged from the system.

## Claims

1. An oil management system for a rotating machine (8) capable of being operated in an inverted orientation for a predetermined maximum period of time, the oil system comprising an oil reservoir (100), a first pump (4) for pumping oil from the oil reservoir (100) to the rotating machine (8), a gravity drain into a sump (152) and a scavenge pump (154) for returning oil from the sump to the reservoir (100), wherein the supply of oil to the rotating machine (8) is interrupted when the machine is in its inverted orientation.

2. An oil management system according to claim 1, wherein the interruption of the supply of oil is achieved by placing a supply duct (104) for the first pump (4) in the reservoir (100) at a position where it is not in fluid flow communication with the oil when the machine (8) is inverted or in zero G conditions.

3. An oil management system according to claim 2, wherein said supply duct (104) is located along a wall of the reservoir (100), said wall comprising a lowermost wall of the reservoir when the machine (8) is in its non-inverted orientation.

4. An oil management system according to claim 1, wherein mechanical means is provided to interrupt said supply of oil.

5. An oil management system according to claim 4, wherein said mechanical means includes a gravity or an electrically operated valve.

6. An oil management system according to any preceding claim, wherein a bypass valve redirects an outlet of the first pump (4) to a flow path back to the reservoir (100) when the machine is in its inverted orientation.

7. An oil management system according to any preceding claim, wherein a second pump (6) is provided in fluid flow connection with the oil reservoir (100) to deliver oil therefrom to actuators (110, 112) forming part of a variable transmission (2) which is part of a drive chain to the rotating machine (8).

8. An oil management system according to claim 7, wherein an oil flow duct (102) to the second pump (6) extends within the body of the reservoir (100) to a central region thereof such that the duct (102) remains covered by oil irrespective of the orientation of the reservoir.

9. An oil management system according to any preceding claim, wherein said oil is filtered before being returned to the reservoir (100).

10. An oil management system according to claim 9, wherein only a single filter (134) is provided.

11. An oil system for an electrical generator (8), comprising:
an oil reservoir (100) supplying oil to a first pump (4) for supplying oil to the generator (8) and to a variable transmission (2) associated with the generator, said oil reservoir (100) also supplying oil to a second pump (6) for providing oil for operating hydraulic actuators (110, 112) for controlling the operation of the variable transmission (2); and
a return path (136) for the oil to the reservoir (100), the system further including an oil fill inlet (156) wherein a single filling operation through the oil fill inlet (156) causes oil to flow through the return path (136) towards the reservoir (100) thereby purging air through an oil cooler and the return path.

12. An oil system according to claim 11, wherein the oil reservoir (100) has an overflow, the height of the overflow being selected such that during a filling operation oil is introduced into the oil fill inlet (156) until such time as oil exits from the reservoir overflow, thereby ensuring that a sufficient amount of oil has been introduced into the system during a filling operation.

13. An oil system according to claim 11 or 12, wherein fluid flow paths to external devices connected to said oil system are arranged to ensure that substantially no air is trapped in said external paths during the filling process.

14. An oil system according to claim 13, wherein said fluid flow paths include one or more bypass fluids around said external devices, each said bypass route being either open, or forced to be open, during a said filling process, thereby allowing air to be purged from said fluid flow paths.
